# EUROPÄISCHE PATENTSCHRIFT

(11) **EP 4 070 436 B1**
(45) Veröffentlichungstag und Bekanntmachung des Hinweises auf die Patenterteilung: **18.06.2025**
(21) Anmeldenummer: 20807655.4
(22) Anmeldetag: 03.11.2020
(51) Int. Cl.: H02K 1/14, H02K 1/18, H02K 16/02, H02K 21/24

(54) **AXIALFLUSSMASCHINE MIT RADIAL VERLAUFENDE BLECHSEGMENTE AUFWEISENDEM STATOR**
AXIAL FLUX MACHINE COMPRISING A STATOR HAVING RADIALLY EXTENDING SHEET METAL SEGMENTS
MACHINE À FLUX AXIAL COMPRENANT UN STATOR AYANT DES SEGMENTS DE TÔLE S'ÉTENDANT RADIALEMENT

(30) Priorität: 04.12.2019 DE 102019133020; 20.01.2020 DE 102020101148
(43) Veröffentlichungstag der Anmeldung: 12.10.2022
(73) Patentinhaber: Schaeffler Technologies AG & Co. KG, 91074 Herzogenaurach (DE)
(72) Erfinder: WITT, Holger, 77815 Bühl (DE)
(86) Internationale Anmeldenummer: PCT/DE2020/100936
(87) Internationale Veröffentlichungsnummer: WO 2021/110198

(56) Entgegenhaltungen:
- EP-A1- 0 729 663
- EP-A2- 1 538 727
- WO-A1-2013/084614
- FR-A1- 2 153 113
- JP-A- 2009 011 086
- JP-A- 2018 029 423
- JP-U- S6 397 375

## Beschreibung

Die Erfindung betrifft eine Axialflussmaschine, vorzugsweise für einen Antriebsstrang eines rein elektrisch oder hybridisch angetriebenen Kraftfahrzeuges, mit einem ringförmigen Stator und zwei relativ zu dem Stator um eine (gemeinsame) Drehachse verdrehbar gelagerten Rotorelementen, wobei ein erstes Rotorelement axial (entlang der Drehachse) neben einer ersten (axialen) Stirnseite des Stators angeordnet ist und ein zweites Rotorelement axial neben einer zweiten (axialen) Stirnseite des Stators angeordnet ist, und wobei der Stator mehrere, in einer Umfangsrichtung einer um die Drehachse herum verlaufenden Kreislinie verteilt angeordnete (vorzugsweise in radialer Richtung keilförmig ausgebildete) Statorkerne aufweist.

Gattungsgemäße Axialflussmaschinen sind bereits aus dem Stand der Technik hinlänglich bekannt. Beispielsweise offenbart die WO 2018/015293 A1 einen Stator für eine Axialflussmaschine mit einem aus mehreren Blechen gebildeten Statorbereich, der mit Zähnen versehen ist.

Weiterer Stand der Technik ist bspw. aus der WO 2014/166811 A2 bekannt, mit dem eine Axialflussmaschine in Leichtbauweise offenbart ist, bei der mehrere Statorzähne in Endbereichen über eine jeweilige Ringstruktur miteinander und mit einem dem Stator radial außen umgebenden Gehäuse verbunden sind. Folglich ist es bereits bekannt Statorkerne mittels Blechen aufzubauen, welche in axialer Richtung seitlich zu den Statorkernen angeordnet sind.

Eine Axialflussmaschine gemäß dem Oberbegriff des Anspruchs 1 ist aus der WO 96/09680 A1 (entspricht der EP 0 729 663 A1) bekannt.

Bezüglich weiteren Standes der Technik wird auf die EP 1 538 727 A2 verwiesen.

Als Nachteil dieser aus dem Stand der Technik bekannten Ausführungen hat es sich jedoch gezeigt, dass der bestehende magnetische Widerstand in den benötigten Richtungen häufig noch relativ groß ist. Auch bilden sich im magnetischen Kern Wirbelströme (verstärkt in den Randbereichen), die aufgrund der Wechselströme in den Wicklungen sowie durch die Magnetfelder vom Rotor hervorgerufen werden. Des Weiteren ist in manchen Fällen eine mechanische Festigkeit relativ gering.

Es ist daher Aufgabe der vorliegenden Erfindung, die aus dem Stand der Technik bekannten Nachteile zu beheben und insbesondere eine Axialflussmaschine mit einem möglichst stabilen Statorkern zur Verfügung zu stellen, wobei zugleich der magnetische Widerstand in den benötigten Richtungen reduziert wird und unerwünschte Wirbelströme vermieden werden.

Diese Aufgabe wird mit den in Anspruch 1 angegebenen Maßnahmen gelöst.

Zumindest ein Statorkern weist mehrere in der Umfangsrichtung übereinander gestapelte, radial verlaufende sowie plattenförmig ausgestaltete Blechsegmente auf, wobei die Gesamtheit an Blechsegmenten an ihren beiden, in Umfangsrichtung einander abgewandten Umfangsseiten von einem aus einem weichmagnetischen Verbundwerkstoff bestehenden Abdeckabschnitt umgeben sind.

Dadurch ergeben sich mehrere Vorteile. Die seitlichen Abdeckabschnitte reduzieren die Wirbelströme. Die mittigen Blechsegmente stellen aufgrund des geringen magnetischen Widerstandes in axialer Richtung eine hohe magnetische Flussdichte in axialer Richtung sicher. Aufgrund unterschiedlicher magnetischer Widerstände vom Blech und vom Verbundwerkstoff in axialer Richtung reduzieren sich die Rastmomente des Rotors. Aufgrund des erhöhten magnetischen Widerstandes in Umfangsrichtung im Statorkern reduzieren sich weiterhin die asymmetrischen Kräfte auf den Rotor aufgrund Abweichungen von der Idealgeometrie.

Weiterführende, vorteilhafte Ausführungen sind mit den Unteransprüchen beansprucht und nachfolgend näher erläutert.

Demnach ist es auch vorteilhaft, wenn der zumindest eine Statorkern mehrere Gruppen an Blechsegmenten aufweist, wobei sich die Blechsegmente der unterschiedlichen Gruppen in ihrer radialen Erstreckung unterscheiden. Dadurch lässt sich auf einfache Weise eine gestufte Blechpaketanordnung erzielen.

Somit ist es weiterhin von Vorteil, wenn die Blechsegmente derart ausgebildet und angeordnet sind, dass sich eine in radialer Richtung einstufig oder mehrstufig in ihrer Erstreckung in Umfangsrichtung ändernde Blechpaketanordnung ergibt.

In diesem Zusammenhang hat es sich als besonders zweckmäßig herausgestellt, wenn der zumindest eine Statorkern neben einer ersten Gruppe mehrerer, untereinander gleich ausgebildeter, sich von einer radialen Innenseite (des Statorkerns) bis hin zu einer radialen Außenseite (des Statorkerns) durchgängig erstreckender erster Blechsegmente, eine zweite Gruppe mehrerer zweiter Blechsegmente aufweist, wobei die zweiten Blechsegmente eine kürzere radiale Erstreckung aufweisen als die ersten Blechsegmente und zu einer ersten Umfangsseite der ersten Gruppe an ersten Blechsegmenten hin angeordnet sind. Dadurch wird der magnetische Widerstand weiter reduziert.

Diesbezüglich ist es auch zweckmäßig, wenn auf einer der ersten Umfangsseite abgewandten zweiten Umfangsseite der Gesamtheit an ersten Blechsegmenten eine dritte Gruppe mehrerer dritter Blechsegmente angeordnet ist, wobei die dritten Blechsegmente eine kürzere radiale Erstreckung aufweisen als die ersten Blechsegmente.

Sind die ersten Blechsegmente des zumindest einen Statorkerns untereinander als Gleichteile ausgebildet, sind diese in Serie besonders wirtschaftlich herstellbar.

In diesem Zusammenhang ist es auch von Vorteil, wenn die zweiten Blechsegmente und/oder die dritten Blechsegmente untereinander als Gleichteile ausgebildet sind.

Vorzugsweise sind die mehreren Statorkerne gleich ausgebildet.

Einer der Abdeckabschnitte oder beide Abdeckabschnitte weisen eine Polschuhkontur mit zumindest einem in Umfangsrichtung abstehenden Vorsprung auf, wodurch eine weiter optimierte Kontur zum Reduzieren der magnetischen Widerstände umgesetzt wird.

Diesbezüglich ist es zudem zweckmäßig, wenn der zumindest eine Vorsprung als eine radial verlaufende Rippe ausgebildet ist.

Verjüngen sich die Abdeckabschnitte in radialer Richtung nach innen, kann die Keilform des Statorkerns auf einfache Weise hergestellt werden.

Des Weiteren ist es zweckmäßig, wenn jeder Statorkern mit einer Statorwicklung versehen ist, wobei diese Statorwicklung mehrere axial aneinander angrenzende Wicklungsschleifen ausbildet und die jeweilige Wicklungsschleife sich in der radialen Richtung nach innen hinsichtlich ihrer umfangsseitigen Weite verengt.

Dabei ist es zweckmäßig, wenn die Statorwicklung zu der ersten Umfangsseite hin parallel zu einer (vorzugsweise ebenen) Umfangsfläche des ersten Abdeckabschnittes verläuft und/oder zu der zweiten Umfangsseite hin parallel zu einer (vorzugsweise ebenen) Umfangsfläche des zweiten Abdeckabschnittes verläuft.

Auch ist es von Vorteil, wenn die Abdeckabschnitte an ihrer den Blechsegmenten (umfangsseitig) zugewandten Seite komplementär zu einer Kontur einer durch die Blechsegmente gebildeten Blechpaketanordnung ausgeformt sind.

Mit anderen Worten ausgedrückt, ist erfindungsgemäß ein Stator für eine Axialflussmaschine mit radial verlaufenden Elektroblechen (Blechsegmenten) umgesetzt. Die Blechplatten des Statorkerns erstrecken sich radial. Der Statorkern ist in Umfangsrichtung mit einem SMC-Material (SMC = "Soft Magnetic Composite") bedeckt.

Die Erfindung wird nun nachfolgend anhand verschiedener Figuren näher erläutert, mit denen auch unterschiedliche Ausführungsbeispiele dargestellt sind.

Es zeigen:
- Fig. 1: eine perspektivische Darstellung einer erfindungsgemäßen, in Längsrichtung geschnittenen Axialflussmaschine nach einem ersten Ausführungsbeispiel, wobei deren Aufbau übersichtlich zu erkennen ist,
- Fig. 2: eine perspektivische Vollansicht eines von mehreren Statorkernen, wie sie in der Axialflussmaschine nach Fig. 1 eingesetzt sind, von seiner radialen Außenseite aus,
- Fig. 3: eine Darstellung des Statorkerns von seiner Vorderseite,
- Fig. 4: eine perspektivische Darstellung eines in dem Statorkern eingesetzten, ersten Blechsegmentes,
- Fig. 5: eine perspektivische Darstellung eines in dem Statorkern eingesetzten, aus einem weichmagnetischen Verbundwerkstoff bestehenden, ersten Abdeckabschnittes,
- Fig. 6: eine perspektivische Darstellung eines durch den Statorkern sowie eine diesen umgebende Statorwicklung gebildeten Teilzusammenbaus,
- Fig. 7: eine perspektivische Darstellung eines Teilzusammenbaus bestehend aus einem nach einem zweiten Ausführungsbeispiel ausgebildeten Statorkern und einer diesen Statorkern umgebenden Statorwicklung,
- Fig. 8: eine perspektivische Darstellung einer Spulenanordnung des Stators nach dem zweiten Ausführungsbeispiel, wobei mehrere, mit Spulenwicklungen umwickelte Statorkerne in Umfangsrichtung aneinandergereiht angeordnet sind, sowie
- Fig. 9: eine Vorderansicht der gesamten Spulenanordnung nach Fig. 8.

Die Figuren sind lediglich schematischer Natur und dienen ausschließlich dem Verständnis der Erfindung. Die gleichen Elemente sind mit denselben Bezugszeichen versehen. Des Weiteren sind die Merkmale der unterschiedlichen Ausführungsbeispiele prinzipiell frei miteinander kombinierbar.

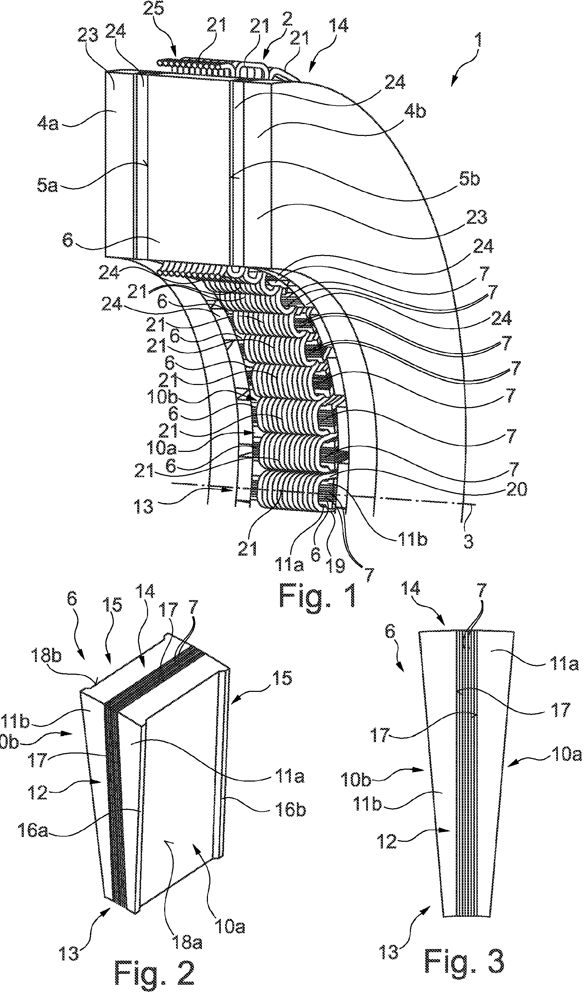

Mit Fig. 1 ist ein Aufbau der erfindungsgemäßen Axialflussmaschine 1 nach einem bevorzugten ersten Ausführungsbeispiel veranschaulicht. Die Axialflussmaschine 1 ist in ihrem bevorzugten Einsatzbereich in einem Kraftfahrzeugantrieb eingesetzt. Das entsprechende Kraftfahrzeug ist demnach entweder als rein elektrisch angetriebenes Kraftfahrzeug oder ein hybridisch angetriebenes Kraftfahrzeug umgesetzt.

Die nachfolgend verwendeten Richtungsangaben beziehen sich auf eine zentrale Drehachse 3 beider Rotorelemente 4a, 4b der Axialflussmaschine 1. Eine axiale Richtung ist demzufolge eine Richtung entlang / parallel zu der Drehachse 3, eine radiale Richtung eine Richtung senkrecht zu der Drehachse 3 und eine Umfangsrichtung eine Richtung entlang einer koaxial um die Drehachse 3 herumverlaufenden Kreislinie konstanten Durchmessers.

Gemäß dem Aufbau einer Axialflussmaschine 1 weist diese einen im Wesentlichen ringförmigen Stator 2 auf, der in der Umfangsrichtung vollständig umläuft (Fig. 1). Es ist zu erkennen, dass der Stator 2 eine Dicke (axiale Erstreckung) aufweist, die geringer als seine Höhe (radiale Dicke / Höhe des Kreisringes) ist. In weiteren Ausführungen ist die axiale Erstreckung auch größer / länger sein als die radiale Höhe des Kreisringes des Stators 2.

Neben dem Stator 2 sind, wie bereits erwähnt, die beiden Rotorelemente 4a, 4b Teil der Axialflussmaschine 1. Zu einer ersten (axialen) Stirnseite 5a des Stators 2 ist ein erstes Rotorelement 4a angeordnet. Zu einer, der ersten Stirnseite 5a axial abgewandten, zweiten (axialen) Stirnseite 5b des Stators 2 ist ein zweites Rotorelement 4b angeordnet. Die Rotorelemente 4a, 4b sind jeweils im Wesentlichen gleich realisiert. Beide Rotorelemente 4a, 4b weisen jeweils einen scheibenförmigen Grundkörper 23 und mehrere in Umfangsrichtung verteilte Magnete 24 (Permanentmagnete) auf, welche Magnete 24 an einer dem Stator 2 zugewandten axialen Seite der Rotorelemente 4a, 4b angeordnet sind. Die Rotorelemente 4a, 4b sind auf typische Weise relativ zum Stator 2 um die Drehachse 3 verdrehbar gelagert.

Wie ebenfalls mit Fig. 1 gezeigt, ist der Stator 2 mit mehreren in einer Umfangsrichtung der Drehachse 3 verteilt angeordneten Statorkernen 6 ausgestattet.

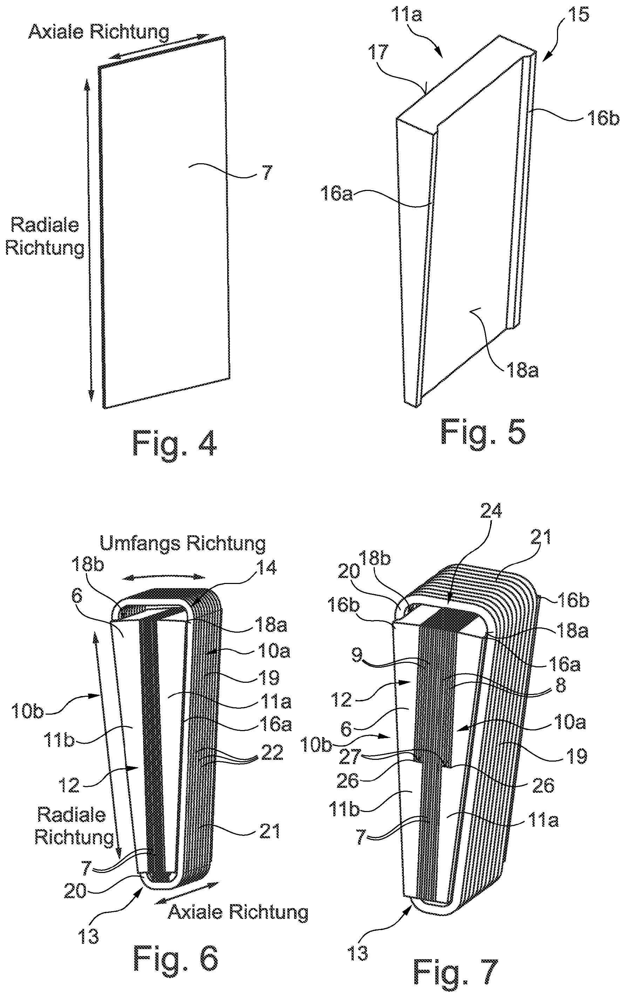

Die Statorkerne 6 sind jeweils untereinander als Gleichteile realisiert. Jeder Statorkern 6 dient zur Aufnahme einer Statorwicklung 21, die mehrere in axialer Richtung nebeneinander angeordnete Wicklungsschleifen 22 aufweist (Fig. 6). Statorkern 6 und Statorwicklung 21 bilden auf typische Weise eine Statorspule 25 / Spulenanordnung. Die Statorspulen 25 sind gleichmäßig und aneinander anschließend in Umfangsrichtung verteilt angeordnet. Die Statorspulen 25 verjüngen sich in radialer Richtung zu ihrer Innenseite hin. Jede Statorspule 25, d.h. jeder Statorkern 6 und jede Statorwicklung 21, weist somit entlang ihrer radialen Erstreckung gesehen eine sich in Umfangsrichtung reduzierende, keilförmige Erstreckung auf.

Unter Zusammenschau der Fign. 1 bis 3 ist des Weiteren zu erkennen, dass jeder Statorkern 6 erfindungsgemäß mehrere in radialer Richtung der Drehachse 3 ausgerichtete / verlaufende erste Blechsegmente 7 aufweist. Jedes erste Blechsegment 7 verläuft entlang der gesamten radialen Länge der Statorkerne 6 bzw. bildet unmittelbar die radialen Enden des Statorkerns 6 mit aus. Mit Fig. 4 und 7 ist ein erstes Blechsegment 7 exemplarisch für die weiteren ersten Blechsegmente 7 dargestellt. Das erste Blechsegment 7 ist rechteckförmig ausgebildet und weist eine größere Erstreckung in radialer Richtung als in axialer Richtung auf (bevorzugt ab einem Außendurchmesser von 200 mm), wobei dies jedoch nicht zwingend ist. Mehrere erste Blechsegmente 7 sind zu einem Blechpaket in Umfangsrichtung übereinandergestapelt angeordnet und jeweils auf typische Weise mittels einer hier der Übersichtlichkeit halber nicht weiter dargestellten Zwischenisolationsschicht zueinander isoliert.

Die ersten Blechsegmente 7 sind untereinander als Gleichteile realisiert. Die ersten Blechsegmente 7 bilden in dieser ersten Ausführung eine Blechpaketanordnung 12 mit über die gesamte radiale Höhe des Statorkerns 6 gleichbleibender Dicke (Erstreckung in Umfangsrichtung).

Der jeweilige Statorkern 6 weist neben der ersten Gruppe an ersten Blechsegmenten 7 zwei keilförmige Abdeckabschnitte 11a, 11b auf, die jeweils aus einem weichmagnetischen Verbundwerkstoff hergestellt sind. Ein erster Abdeckabschnitt 11a ist zu der ersten Umfangsseite 10a der Gruppe an ersten Blechsegmenten 7 aufgebracht, während ein zweiter Abdeckabschnitt 11b zu der zweiten Umfangsseite 10b der Gruppe an ersten Blechsegmenten 7 aufgebracht ist.

Die beiden Abdeckabschnitte 11a, 11b sind gleich ausgeformt, wobei in Fig. 5 stellvertretend der erste Abdeckabschnitt 11a veranschaulicht ist. Der erste Abdeckabschnitt 11a ist demnach auf einer an den ersten Blechsegmenten 7 in Umfangsrichtung anliegenden Seite mit einer ebene Auflagefläche 17 ausgebildet. Zu einer den Blechsegmenten 7 desselben Statorkerns 6 in Umfangsrichtung abgewandten Seite (erste Umfangsseite 10a) bildet der erste Abdeckabschnitt 11a eine (erste) Umfangsfläche 18a aus. Die Umfangsfläche 18a ist zu ihren axialen Seiten durch jeweils einen, eine Polschuhkontur 15 mit ausbildenden Vorsprung 16a, 16b begrenzt. Die beiden Vorsprünge 16a, 16b stehen in Umfangsrichtung ab. Jeder Vorsprung 16a, 16b bildet eine in radialer Richtung (über die gesamte radiale Höhe des Statorkerns 6) verlaufende Rippe.

Wie weiterhin in Fig. 6 ersichtlich, verläuft die Statorwicklung 21 mit einem ersten Abschnitt 19 parallel und benachbart zu der ersten Umfangsfläche 18a. Mit einem zweiten Abschnitt 20 erstreckt sich die Statorwicklung 21 parallel und benachbart zu der (zweiten) Umfangsfläche 18b des zweiten Abdeckabschnittes 11b.

Mit den Fign. 7 bis 9 ist ein weiteres zweites Ausführungsbeispiel gezeigt. Nach dem zweiten Ausführungsbeispiel ist nicht mehr nur eine erste Gruppe an ersten Blechsegmenten 7 in dem jeweiligen Statorkern 6 vorgesehen. Es sind zusätzlich eine zweite Gruppe an zweiten Blechsegmenten 8 und eine dritte Gruppe an dritten Blechsegmenten 9 vorhanden. Die zweiten Blechsegmente 8 sind zu der ersten Umfangsseite 10a hin direkt in Anlage an den ersten Blechsegmenten 7 angeordnet. Die dritten Blechsegmente 9 sind zu der zweiten Umfangsseite 10b hin direkt in Anlage an den ersten Blechsegmenten 7 angeordnet. Zweite Blechsegmente 8 und dritte Blechsegmente 9 sind in dieser Ausführung gleich / als Gleichteile ausgebildet.

Die zweiten Blechsegmente 8 sowie die dritten Blechsegmente 9 sind jedoch in radialer Richtung kürzer als die ersten Blechsegmente 7. Die zweiten Blechsegmente 8 sowie die dritten Blechsegmente 9 sind im Wesentlichen als auf einer radialen Höhe halbierte erste Blechsegmente 7 umgesetzt. Jedes zweite Blechsegmente 8 und jedes dritte Blechsegment 9 bildet das äußere radiale Ende des Statorkerns 6 aus bzw. ist zu der radialen Außenseite 14 hin geöffnet. Die Gesamtheit an Blechsegmenten 7, 8, 9 ist folglich derart angeordnet, dass sie eine in radialer Richtung gestufte Blechpaketanordnung 12 ausbildet. In dieser Ausführung ist die Blechpaketanordnung 12 einfach gestuft, d.h. ihre Dicke / Erstreckung in Umfangsrichtung reduziert an einer radialen Höhe unter Ausbildung einer Stufe 26. In weiteren Ausführungen sind jedoch auch mehrere Stufen (an unterschiedlichen radialen Höhen) vorhanden.

Das jeweilige zweite und dritte Blechsegment 8, 9 ist durch die Abdeckabschnitte 11a, 11b in Umfangsrichtung und zur radialen Innenseite 13 hin abgedeckt. Die Abdeckabschnitte 11a, 11b weisen somit in dem zweiten Ausführungsbeispiel eine komplementär zu der Stufe 26 ausgebildete Gegenstufe 27 aus.

Die Blechsegmente 7, 8, 9 der unterschiedlichen Ausführungsbeispiele sind jeweils aus einem Elektroblech gefertigt.

Mit anderen Worten ausgedrückt, ist erfindungsgemäß vorgeschlagen, dass die Bleche 8, 18, 19 radial verlaufen und in Umfangsrichtung seitlich mit SMC (Abdeckabschnitte 11a, 11b) abgedeckt sind.

Figur 2 zeigt einen einzelnen Statorzahn 6 ohne Wicklung. Der Statorzahn 6 besteht aus einem mittleren Bereich, welcher aus Eisenblechen 7 besteht, welche in Umgangsrichtung gestapelt sind, wobei die einzelnen Blechschichten 7 elektrisch voneinander isoliert sind. Die einzelnen Bleche 7 verlaufen jeweils näherungsweise in radialer und axialer Richtung (bilden eine entsprechende Fläche welche näherungsweise senkrecht zur Umfangsrichtung ist).

In Umfangsrichtung sind die gestapelten Bleche 7 durch ein magnetisch gut leitfähiges, aber elektrisch schlecht leitendes Material (z.B. SMC = Soft-Magnetic-Composite) umschlossen bzw. abgedeckt. Dargestellt sind diese Materialabschnitte 11a, 11b als keilförmige Bauteile, welche auf beiden Seiten in Umfangsrichtung an dem Blechstapel 7, 12 anliegen und z.B. an den Blechen 7, 12 fixiert sind.

Fig. 3 zeigt den gleichen Aufbau, jedoch statt in einer 3D-Ansicht in der Draufsicht aus axialer Richtung. Figur 4 zeigt ein einzelnes Blech 7 in einer 3-D-Ansicht zusammen mit der Ausrichtung der Bleche 7 im Statorkern 6.

Figur 5 zeigt ein Seitenteil 11a aus magnetisch gut leitendem, aber elektrisch schlecht leitendem Material (z.B. SMC=Soft-Magnetic-Compound). Die Seitenteile 11a, 11b weisen an den Enden in axialer Richtung Konturen 16a, 16b, 15 für die Ausbildung von Polschuhen auf. Zwischen den beiden Konturen 16a, 16b für die Polschuhe ist der Bereich 18a, 18b zur Aufnahme der Wicklung 21 für den Statorzahn 6. Die Seitenteile 11a, 11b können auch aus mehreren Einzelteilen zusammengesetzt sein (z.B. indem diese senkrecht zur axialen Richtung unterteilt sind, so dass die Teile durch eine Bewegung in axialer Richtung gefügt werden können), wobei dies hier der Übersichtlichkeit halber nicht gesondert dargestellt ist.

Figur 6 zeigt einen einzelnen Statorzahn 6 ergänzt um eine elektrische Wicklung 21. Es wird hier eine Einzelzahnwicklung 21 gezeigt, jedoch sind auch andere Wicklungsformen möglich. Die Bleche 7 in der Mitte des Statorzahns 6 haben über die gesamte radiale Höhe des Zahns 6 eine konstante Stapelhöhe.

Figur 7 zeigt ebenfalls einen Statorzahn 6 mit Einzelzahnwicklung 21. Im Gegensatz zur Figur 6 weist das mittlere Blechpaket 12 bei verschiedenen radialen Höhen unterschiedliche Stapelhöhen auf (in diesem Fall zwei unterschiedliche Stapelhöhen). Bei höherem Fertigungsaufwand sind natürlich auf mehr Stufen 26 der Stapelhöhe möglich. Die unterschiedlichen Stapelhöhen ermöglichen einen besseren magnetischen Fluss in axialer Richtung aufgrund des höheren Anteils an Elektroblech im Gesamtzahn 6.

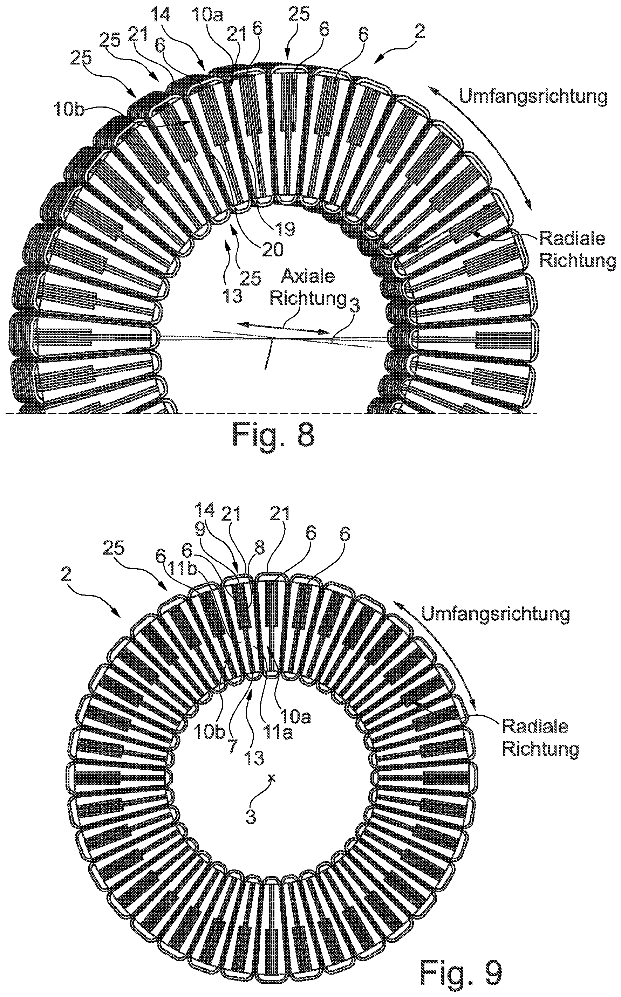

Figur 8 zeigt eine 3-D Ansicht, bei der mehrere Statorzähne 6 zu einem Gesamtstator 2 zusammengefügt sind. Die einzelnen Statorzähne 6 sind in Umfangsrichtung um die Rotationsachse 3 des Rotors 4a, 4b ringförmig angeordnet.

Figur 9 zeigt den gleichen Aufbau von Figur 8 in der Draufsicht in Richtung der Drehachse 3. Dargestellt sind hier Statorzähne 6 mit zwei unterschiedlichen Stapelhöhen der Bleche 7, 8, 9 auf unterschiedlichen radialen Höhen des Stators 2. Eine Verschaltung der Wicklungen 21 zu unterschiedlichen Phasen ist hier nicht dargestellt.

In Figur 1 ist der Stator 2 ergänzt mit einem rechten und einem linken Rotor 4a, 4b. Im Schnitt sind die an der Oberfläche des magnetischen Rückschlusses angeordneten Magnete 24 sichtbar. Eine mechanische Abstützung der Statorzähne 6 (z.B. mittels Kunstoffverguss), die Lagerung der Rotoren 4a, 4b sowie die Ausgangswelle sind nicht dargestellt.

### Bezugszeichenliste

- 1: Axialflussmaschine
- 2: Stator
- 3: Drehachse
- 4a: erstes Rotorelement
- 4b: zweites Rotorelement
- 5a: erste Stirnseite
- 5b: zweite Stirnseite
- 6: Statorkern
- 7: erstes Blechsegment
- 8: zweites Blechsegment
- 9: drittes Blechsegment
- 10a: erste Umfangsseite
- 10b: zweite Umfangsseite
- 11a: erster Abdeckabschnitt
- 11b: zweiter Abdeckabschnitt
- 12: Blechpaketanordnung
- 13: Innenseite
- 14: Außenseite
- 15: Polschuhkontur
- 16a: erster Vorsprung
- 16b: zweiter Vorsprung
- 17: Auflagefläche
- 18a: erste Umfangsfläche
- 18b: zweite Umfangsfläche
- 19: erster Abschnitt
- 20: zweiter Abschnitt
- 21: Statorwicklung
- 22: Wicklungsschleife
- 23: Grundkörper
- 24: Magnet
- 25: Statorspule
- 26: Stufe
- 27: Gegenstufe

## Patentansprüche

1. Axialflussmaschine (1), die aufweist:
einen ringförmigen Stator (2), der mehrere in einer Umfangsrichtung einer um die Drehachse (3) herum verlaufenden Kreislinie verteilt angeordnete Statorkerne (6) aufweist, wobei zumindest ein Statorkern (6) mehrere in der Umfangsrichtung übereinander gestapelte, radial verlaufende sowie plattenförmig ausgestaltete Blechsegmente (7, 8, 9) aufweist, und
zwei relativ zu dem Stator (2) um eine Drehachse (3) verdrehbar gelagerte Rotorelemente (4a, 4b), wobei ein erstes Rotorelement (4a) axial neben einer ersten Stirnseite (5a) des Stators (2) angeordnet ist und ein zweites Rotorelement (4b) axial neben einer zweiten Stirnseite (5b) des Stators (2) angeordnet ist,
**dadurch gekennzeichnet, dass**
die Gesamtheit an Blechsegmenten (7, 8, 9) an ihren beiden, in Umfangsrichtung einander abgewandten Umfangsseiten (10a, 10b) jeweils von einem aus einem weichmagnetischen Verbundwerkstoff bestehenden Abdeckabschnitt (11a, 11b) umgeben ist, und
jeder Abdeckabschnitt (11a, 11b) zu einer den Blechsegmenten (7, 8, 9) desselben Statorkerns (6) in Umfangsrichtung abgewandten Seite jeweils eine Umfangsfläche (18a, 18b) ausbildet, die an ihren axialen Seiten durch jeweils einen eine Polschuhkontur (15) mit ausbildenden, in Umfangsrichtung abstehenden Vorsprung (16a, 16b) begrenzt ist.

2. Axialflussmaschine (1) nach Anspruch 1, **dadurch gekennzeichnet, dass**
der zumindest eine Statorkern (6) mehrere Gruppen an Blechsegmenten (7, 8, 9) aufweist, und
sich die Blechsegmente (7, 8, 9) der unterschiedlichen Gruppen in ihrer radialen Erstreckung unterscheiden.

3. Axialflussmaschine (1) nach Anspruch 1 oder 2, **dadurch gekennzeichnet, dass** die Blechsegmente (7, 8, 9) derart ausgebildet und angeordnet sind, dass sich eine in radialer Richtung einstufig oder mehrstufig in ihrer Erstreckung in Umfangsrichtung ändernde Blechpaketanordnung (12) ergibt.

4. Axialflussmaschine (1) nach einem der Ansprüche 1 bis 3, **dadurch gekennzeichnet, dass**
der zumindest eine Statorkern (6) neben einer ersten Gruppe mehrerer, untereinander gleich ausgebildeter, sich von einer radialen Innenseite (13) bis hin zu einer radialen Außenseite (14) durchgängig erstreckender, erster Blechsegmente (7), eine zweite Gruppe mehrerer zweiter Blechsegmente (8) aufweist, und
die zweiten Blechsegmente (8) eine kürzere radiale Erstreckung aufweisen als die ersten Blechsegmente (7) und zu einer ersten Umfangsseite (10a) der ersten Gruppe an ersten Blechsegmenten (7) hin angeordnet sind.

5. Axialflussmaschine (1) nach Anspruch 4, **dadurch gekennzeichnet, dass**
auf einer der ersten Umfangsseite (10a) abgewandten zweiten Umfangsseite (10b) der Gesamtheit an ersten Blechsegmenten (7) zusätzlich zu der zweiten Gruppe eine dritte Gruppe mehrerer dritter Blechsegmente (9) angeordnet ist, und
die dritten Blechsegmente (9) eine kürzere radiale Erstreckung aufweisen als die ersten Blechsegmente (7).

6. Axialflussmaschine (1) nach einem der Anspruch 1 bis 5, **dadurch gekennzeichnet, dass** der zumindest eine Vorsprung (16a, 16b) als eine radial verlaufende Rippe ausgebildet ist.

7. Axialflussmaschine (1) nach einem der Ansprüche 1 bis 6, **dadurch gekennzeichnet, dass** sich die Abdeckabschnitte (11a, 11b) in radialer Richtung nach innen verjüngen.

8. Axialflussmaschine (1) nach einem der Ansprüche 1 bis 7, **dadurch gekennzeichnet, dass** die Abdeckabschnitte (11a, 11b) an ihrer den Blechsegmenten (7, 8, 9) zugewandten Seite komplementär zu einer Kontur einer durch die Blechsegmente (7, 8, 9) gebildeten Blechpaketanordnung (12) ausgeformt sind.

## Claims

1. An axial flux machine (1) comprising:
an annular stator (2) having multiple stator cores (6) arranged distributed in a circumferential direction of a circular line extending about the axis of rotation (3), wherein at least one stator core (6) has multiple sheet metal segments (7, 8, 9) stacked on top of one another in the circumferential direction, extending radially and designed in the form of plates, and
two rotor elements (4a, 4b) mounted so as to be rotatable relative to the stator (2) about an axis of rotation (3), wherein a first rotor element (4a) is arranged axially next to a first end face (5a) of the stator (2) and a second rotor element (4b) is arranged axially next to a second end face (5b) of the stator (2),
**characterised in that**
each of the sheet metal segments (7, 8, 9) is surrounded on its two circumferential sides (10a, 10b) facing away from one another in the circumferential direction by a cover section (11a, 11b) made of a soft magnetic composite material, and
each cover section (11a, 11b) forms a circumferential surface (18a, 18b) on a side facing away from the sheet metal segments (7, 8, 9) of the same stator core (6) in the circumferential direction, which surface is bounded on its axial sides by a respective projection (16a, 16b) that forms a pole shoe contour (15 and projects in the circumferential direction.

2. The axial flux machine (1) according to claim 1, **characterised in that** the at least one stator core (6) has multiple groups of sheet metal segments (7, 8, 9), and
the sheet metal segments (7, 8, 9) of the different groups differ in their radial extension.

3. The axial flux machine (1) according to claim 1 or 2, **characterised in that** the sheet metal segments (7, 8, 9) are designed and arranged in such a way that a sheet metal stack arrangement (12) is produced which changes in its extension in the circumferential direction in a single state or multiple stages in the radial direction.

4. The axial flux machine (1) according to one of claims 1 to 3, **characterised in that**
the at least one stator core (6) has, in addition to a first group of multiple first sheet metal segments (7) which are identical to one another and extend continuously from a radial inner side (13) to a radial outer side (14), a second group of multiple second sheet metal segments (8), and
the second sheet metal segments (8) have a shorter radial extension than the first sheet metal segments (7) and are arranged towards a first circumferential side (10a) of the first group of first sheet metal segments (7).

5. The axial flux machine (1) according to claim 4, **characterised in that**
on a second circumferential side (10b) of the entirety of first sheet metal segments (7) facing away from the first circumferential side (10a), a third group of multiple third sheet metal segments (9) is arranged in addition to the second group, and
the third sheet metal segments (9) have a shorter radial extension than the first sheet metal segments (7).

6. The axial flux machine (1) according to one of claims 1 to 5, **characterised in that** the at least one projection (16a, 16b) is designed as a radially extending rib.

7. The axial flux machine (1) according to one of claims 1 to 6, **characterised in that** the cover sections (11a, 11b) taper inwards in the radial direction.

8. The axial flux machine (1) according to one of claims 1 to 7, **characterised in that** the cover sections (11a, 11b) are shaped on their side facing the sheet metal segments (7, 8, 9) such as to complement a contour of a sheet metal stack arrangement (12) formed by the sheet metal segments (7, 8, 9).

## Revendications

1. Machine à flux axial (1), qui présente :
un stator annulaire (2) qui présente plusieurs noyaux de stator (6) agencés de façon à être répartis dans une direction périphérique d'une ligne circulaire s'étendant autour de l'axe de rotation (3), dans laquelle au moins un noyau de stator (6) présente plusieurs segments de tôle (7, 8, 9) empilés les uns sur les autres dans la direction périphérique, s'étendant radialement et réalisés en forme de plaque, et
deux éléments de rotor (4a, 4b) montés de manière à pouvoir tourner par rapport au stator (2) autour d'un axe de rotation (3), dans laquelle un premier élément de rotor (4a) est agencé axialement à côté d'une première face frontale (5a) du stator (2) et un second élément de rotor (4b) est agencé axialement à côté d'une seconde face frontale (5b) du stator (2),
**caractérisée en ce que**
l'ensemble des segments de tôle (7, 8, 9) est entouré sur ses deux côtés périphériques (10a, 10b) opposés l'un à l'autre dans la direction périphérique respectivement par une section de couverture (11a, 11b) constituée d'un matériau composite faiblement magnétique, et
chaque section de couverture (11a, 11b) forme, vers un côté opposé aux segments de tôle (7, 8, 9) du même noyau de stator (6) dans la direction périphérique, respectivement une surface périphérique (18a, 18b) qui est délimitée sur ses côtés axiaux par respectivement une protubérance (16a, 16b) faisant saillie dans la direction périphérique et concevant un contour de pièce polaire (15).

2. Machine à flux axial (1) selon la revendication 1, **caractérisée en ce que** l'au moins un noyau de stator (6) présente plusieurs groupes de segments de tôle (7, 8, 9), et
les segments de tôle (7, 8, 9) des différents groupes se distinguent par leur extension radiale.

3. Machine à flux axial (1) selon la revendication 1 ou 2, **caractérisée en ce que** les segments de tôle (7, 8, 9) sont conçus et agencés de telle sorte qu'il en résulte un agencement de paquets de tôles (12) dont l'extension dans la direction périphérique varie en un ou plusieurs étages dans la direction radiale.

4. Machine à flux axial (1) selon l'une quelconque des revendications 1 à 3, **caractérisée en ce que**
l'au moins un noyau de stator (6) présente, en plus d'un premier groupe de plusieurs premiers segments de tôle (7) conçus de façon identique entre eux et s'étendant en continu d'un côté intérieur radial (13) jusqu'à un côté extérieur radial (14), un deuxième groupe de plusieurs deuxièmes segments de tôle (8), et
les deuxièmes segments de tôle (8) présentent une extension radiale plus courte que les premiers segments de tôle (7) et sont agencés vers un premier côté périphérique (10a) du premier groupe de premiers segments de tôle (7).

5. Machine à flux axial (1) selon la revendication 4, **caractérisée en ce que**
sur un second côté périphérique (10b), opposé au premier côté périphérique (10a), de l'ensemble des premiers segments de tôle (7) est agencé, en plus du deuxième groupe, un troisième groupe de plusieurs troisièmes segments de tôle (9), et
les troisièmes segments de tôle (9) présentent une extension radiale plus courte que les premiers segments de tôle (7).

6. Machine à flux axial (1) selon l'une quelconque des revendications 1 à 5, **caractérisée en ce que** l'au moins une protubérance (16a, 16b) est conçue comme une nervure s'étendant radialement.

7. Machine à flux axial (1) selon l'une quelconque des revendications 1 à 6, **caractérisée en ce que** les sections de couverture (11a, 11b) se rétrécissent vers l'intérieur dans la direction radiale.

8. Machine à flux axial (1) selon l'une quelconque des revendications 1 à 7, **caractérisée en ce que** les sections de couverture (11a, 11b) sont formées sur leur côté tourné vers les segments de tôle (7, 8, 9) de façon complémentaire à un contour d'un agencement de paquets de tôles (12) formé par les segments de tôle (7, 8, 9).
